# EUROPÄISCHE PATENTANMELDUNG

(11) **EP 1 178 570 A2**
(43) Veröffentlichungstag der Anmeldung: **06.02.2002**
(21) Anmeldenummer: 01117086.7
(22) Anmeldetag: 13.07.2001
(51) Int. Cl.: H01R 9/24

(54) **Anschlussleiste für die Daten- und Telekommunikationstechnik**

(30) Priorität: 02.08.2000 DE 10038055
(71) Anmelder: KRONE GmbH, 14167 Berlin (DE); Wilhelm Rutenbeck GmbH & Co, 58579 Schalksmühle (DE)
(72) Erfinder: Taybl, Christa, 14197 Berlin (DE); Müller, Manfred, 13156 Berlin (DE)

(57) **Zusammenfassung**

Die Erfindung bezieht sich auf eine Anschlußleiste, insbesondere für die Daten- und Telekommunikationstechnik, umfassend eine Trägerplatte (1) und mehrere leistenförmigen Oberteile (2,3) , die Schneid-Klemm-Kontaktelemente aufnehmen, zum elektrischen Kontaktieren von isolierten Kabeladern. Um eine Anschlußleiste zu schaffen, die entsprechend der gewünschten Anzahl der anzuschließenden Kabeladern flexibel aufgebaut und angepaßt werden kann, sind die leistenförmigen Oberteile (2, 3) mit unterschiedlichen Gehäuselängen (11, 12) ausgebildet, Fig. 1.

## Beschreibung

Die vorliegende Erfindung bezieht sich auf eine Anschlußleiste der Fernmeldetechnik gemäß dem Oberbegriff des Anspruches 1.

Eine Anschlußleiste der gattungsgemäßen Art ist aus der EP 0302814 B1 vorbekannt. Die Anschlußleiste besteht aus einer Trägerplatte und aus mehreren Teilleisten, die hintereinander in die Trägerplatte eingesteckt werden und gemeinsam das Oberteil der Anschlußleiste bilden. In der Anschlußleiste sind Schneid-Klemm-Kontaktelemente angeordnet, an die isolierte Kabeladern kontaktiert werden. Die Kabeladern werden mittels eines Werkzeuges in das Schneid-Klemm-Kontaktelement eingedrückt, wobei die scharfen Kanten des Kontaktschlitzes der Schneid-Klemm-Kontaktelemente die Isolierung der Kabeladern durchschneiden, wodurch eine elektrische Verbindung zwischen den leitenden Kern der Kabelader und dem Schneid-Klemm-Kontaktelement hergestellt wird. Nachteilig bei dieser Anschlußleiste ist, daß nur eine festgelegte Anzahl von Kabeladern anschließbar ist.

Die Erfindung liegt von daher die Aufgabe zugrunde, eine Anschlußleiste der gattungsgemäßen Art zu schaffen, die entsprechend der gewünschten Anzahl der anzuschließenden Kabeladern flexibel aufgebaut und angepaßt werden kann.

Die Lösung der Aufgabe ergibt sich aus den kennzeichnenden Merkmalen des Patentanspruches 1.

Die erfindungsgemäße Anschlußleiste hat insbesondere den Vorteil, daß verschiedene Längen von Oberteilen verwendet werden können und die Anschlußleiste somit flexibel nach der gewünschten Anzahl der anzuschließenden Kabeladern verwendet werden kann.

Weitere vorteilhafte Ausgestaltungen der Erfindung ergeben sich aus den Unteransprüchen. Durch einfache Rastverbindungen können die verschiedenen Oberteile schnell und flexibel auf der Trägerplatte befestigt werden. In einer weiteren Ausführungsform der Anschlußleiste sind Trägerplatte und zumindest ein Oberteil einstückig ausgebildet.

Die Erfindung wird lediglich beispielhaft anhand der beiliegenden Zeichnungen beschrieben.

Es zeigen:
- Figur 1: eine perspektivische Ansicht einer Anschlußleiste, wobei die Oberteile von der Trägerplatte getrennt gezeigt sind.;
- Figur 2: eine perspektivische Ansicht einer Anschlußleiste, wobei zwei Oberteile auf der Trägerplatte aufgerastet sind;
- Figur 3: eine perspektivische Ansicht einer Anschlußleiste, wobei nur ein Oberteil auf der Trägerplatte aufgerastet ist;

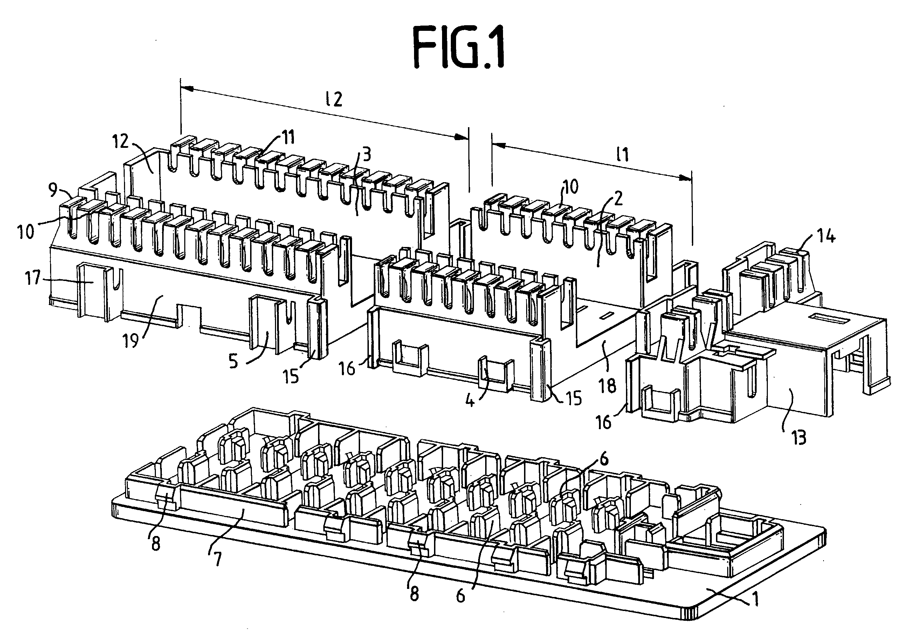

In der Figur 1 ist dargestellt, daß die Anschlußleiste 1 aus zwei Oberteilen 2,3, einem Zusatzmodul 13 und einer Trägerplatte 1 besteht. Es sei schon hier erwähnt, daß anstelle der Trägerplatte 1 auch andere Einrichtungen denkbar sind, zum Beispiel eine Bodenplatte eines Gehäuses. Die Trägerplatte 1 besteht im Wesentlichen aus einer flachen rechteckförmigen Aufnahmeplatte. Die Trägerplatte 1 weist im inneren Bereich eine Vielzahl von Stegen 6 auf, die nicht dargestellte aufrechtstehende Schneid-Klemm-Kontaktelemente abstützen. Die Schneid-Klemm-Kontaktelemente werden darüber hinaus im Inneren der Oberteile 2, 3 in nicht dargestellten Führungen aufgenommen und somit fixiert. Die Schneid-Klemm-Kontaktelemente besitzen zwei federnde Kontaktschenkel zwischen denen ein nach oben offener Kontaktschlitz gebildet wird. Darüber hinaus weist die Trägerplatte 1 eine umlaufende äußere Wand 7 auf.

Die Oberteile 2,3 weisen zwei Reihen 9 von Klemmstegen 10 auf, zwischen zwei Klemmstegen 10 wird eine Klemmaufnahme 11 gebildet, wobei eine Reihe 9 für die ankommenden und die andere Reihe 9 für die abgehenden Kabeladern vorgesehen ist. Zwischen den beiden Reihen der Klemmstege 10 befindet sich eine Aufnahme 12, in die Zusatzeinrichtungen, wie z.B. eine Überspannungsvorrichtung oder Prüfvorrichtungen einsteckbar sind. Die Schneid-Klemm-Kontaktelemente sind im Inneren der Oberteile 2,3 derart angeordnet, daß jeweils ein Kontaktschenkel der Schneid-Klemm-Kontaktelemente im Inneren der Klemmstege 10 gehalten werden und der nach oben offenen Kontakschlitz zwischen den Klemmstegen angeordnet und über die Klemmaufnahme 11 zugänglich ist.

Die zu kontaktierende Kabelader wird in die Klemmaufnahme 11 eingelegt und mittels eines nicht dargestellten Werkzeuges vollständig in die Klemmaufnahme 11 eingedrückt, wodurch die Kabelader gleichzeitig in den Kontaktschlitz des Schneid-Klemm-Kontaktelemente eingedrückt wird. Die scharfen Kanten des Kontaktschlitzes durchschneiden hierbei die Isolierung der Kabelader und stellen einen elektrisches Kontakt zum leitenden Kern der Kabelader her. Die Schneid-Klemm-Kontaktelemente der einen Reihe 9 (z.B. für die ankommenden Kabeladern) sind mit den Schneid-Klemm-Kontaktelemente der anderen Reihe (z.B. für die abgehenden Kabeladern) verbunden.

Die Anzahl der anzuschließenden Kabeladern entspricht demnach der Anzahl der vorhandenen Schneid-Klemm-Kontaktelemente. Wie in der Figur 1 dargestellt, sind die Oberteile 2 und 3 unterschiedlich lang ausgebildet. Das Oberteil 2 besitzt eine kleinere Länge 11 als das Oberteil 3 mit der größeren Länge 12. Somit ist die Anzahl der anzuschließenden Kabeladern unterschiedlich. Das Oberteil 2 läßt den Anschluß von acht ankommende und acht abgehende Kabeladern zu, bzw. vier Doppeladern (4 DA). An das Oberteil 3 können insgesamt zwölf ankommende und zwölf abgehende Kabeladern angeschlossen werden, bzw. sechs Doppeladern (6 DA).

Darüber hinaus ist ein Zusatzmodul 13, insbesondere ein Erdungsmodul 13 auf der Trägerplatte 1 einrastbar. Am Erdungsmodul 13 wird eingangsseitig die Schirmung des ankommenden Kabels angeschlossen. Zwischen den Klemmstegen 14 des Erdungsmoduls befinden sich auch hier Schneid-Klemm-Kontaktelemente, an denen der Erdbeidrähte angeschlossen werden, die für die Erdverbindung sorgen.

Die Oberteile 2,3 und das Zusatzmodul 13 sind über Rastverbindungen mit der Trägerplatte 1 montierbar. Hierzu befinden sich an der Trägerplatte 1 mehrere Rasthaken 8, die einstückig mit der äußeren Wand 7 der Trägerplatte 1 verbunden sind. An den Oberteilen 2,3 sind an den Seitenwänden 19 entsprechende Rastaufnahmen 4,5 vorgesehen, wobei die Rastaufnahmen 5 durch Druck auf die Betätigungsflächen 17, die Rasthaken 8 freigeben, so daß das Oberteil 3 leicht ohne Werkzeug von der Trägerplatte 1 entriegelt werden kann. Zwischen den Oberteilen 2,3 und dem Zusatzmodul 13 sind darüber hinaus an den Stirnseiten 18 Führungselemente vorgesehen, die aus einer Nut 15 und einer Feder 16 bestehen. Durch diese Führungselemente sind die Oberteile 2,3 und das Zusatzmodul 13 an den Stirnseiten 18 miteinander lösbar verbunden. Zur Verbindung der Teile 2,3 und 13 müssen die Teile somit ineinander geschoben werden.

Die Trägerplatte 1 kann ein kürzeres Oberteil 2 und/oder ein längeres Oberteil 3 oder zwei kürzere Oberteile 2 oder zwei längere Oberteile 3 aufnehmen. Somit sind entweder 4 DA, 6 DA, 10 DA oder 12 DA jeweils für die ankommende und abgehende Kabelseite anschließbar.

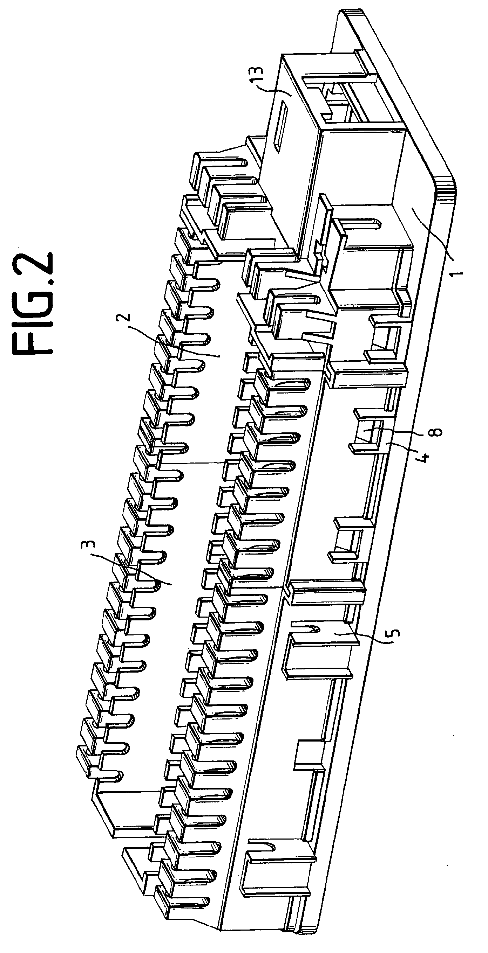

In der Figur 2 ist dargestellt, daß ein kürzeres Oberteil 2 und ein längeres Oberteil 3 auf der Trägerplatte 1 aufgerastet ist. Die Rasthaken 8 sind in die Rastaufnahmen 4,5 eingerastet.

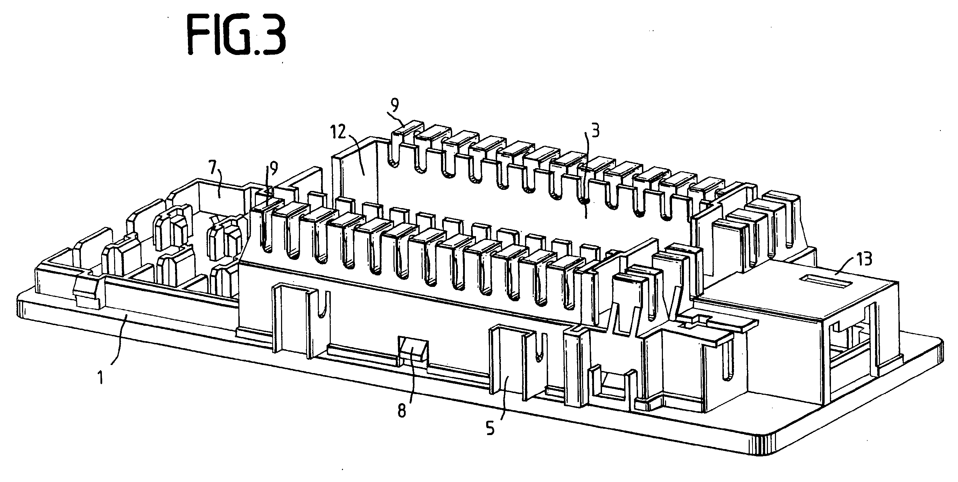

Die Figur 3 zeigt eine Anschlußleiste mit nur einem längeren Oberteil 3, so daß 6 DA anschließbar sind. Das Oberteil 3 wird beidseitig mit jeweils drei Rasthaken 8 mit der Trägerplatte 1 verbunden.

Die Anschlußleiste kann insbesondere in Endverzweigern der Datenund Telekommunikationstechnik eingesetzt werden.

### BEZUGSZEICHENLISTE:

- 1: Trägerplatte
- 2: Oberteil
- 3: Oberteil
- 4: Rastaufnahme
- 5: Rastaufnahme
- 6: Stege
- 7: Wand
- 8: Rasthaken
- 9: Reihen
- 10: Klemmstege
- 11: Klemmaufnahme
- 12: Aufnahme
- 13: Zusatzmodul
- 14: Klemmstege
- 15: Nut
- 16: Feder
- 17: Betätigungsfläche
- 18: Stirnseite
- 19: Seitenwand

- 11, 12: Länge der Oberteile

## Patentansprüche

1. Anschlußleiste, insbesondere für die Daten- und Telekommunikationstechnik, umfassend eine Trägerplatte (1) und mehrere leistenförmige Oberteile (2,3) , die Schneid-Klemm-Kontaktelemente aufnehmen, zum elektrischen Kontaktieren von isolierten Kabeladern,
**dadurch gekennzeichnet,**
**daß** die leistenförmigen Oberteile (2, 3) mit unterschiedlichen Gehäuselängen (11, 12) ausgebildet sind.

2. Anschlußmodul nach Anspruch 1, **dadurch gekennzeichnet, daß** die Oberteile (2,3) Rastaufnahmen (4,5) aufweisen, in die an der Trägerplatte (1) angeordnete Rasthaken (8) einrasten.

3. Anschlußmodul nach Anspruch 1, **dadurch gekennzeichnet, daß** auf der Trägerplatte (1) ein Oberteil (2) zum Anschluß von vier ankommenden und abgehenden Doppeladern aufrastbar ist.

4. Anschlußmodul nach Anspruch 1, **dadurch gekennzeichnet, daß** auf der Trägerplatte (1) ein Oberteil (3) zum Anschluß von sechs ankommenden und abgehenden Doppeladern aufrastbar ist.

5. Anschlußmodul nach Anspruch 1, **dadurch gekennzeichnet, daß** auf der Trägerplatte (1) ein Oberteil (2) zum Anschluß von vier ankommenden und abgehenden Doppeladern und ein Oberteil (3) zum Anschluß von sechs ankommenden und abgehenden Doppeladern aufrastbar sind.

6. Anschlußmodul nach Anspruch 1, **dadurch gekennzeichnet, daß** auf der Trägerplatte (1) zwei Oberteile (2) zum Anschluß von jeweils vier ankommenden und abgehenden Doppeladern aufrastbar sind.

7. Anschlußmodul nach Anspruch 1, **dadurch gekennzeichnet, daß** auf der Trägerplatte (1) zwei Oberteile (3) zum Anschluß von jeweils sechs ankommenden und abgehenden Doppeladern aufrastbar sind.

8. Anschlußmodul nach Anspruch 1, **dadurch gekennzeichnet, daß** auf der Trägerplatte (1) ein Zusatzmodul (13), insbesondere ein Erdungsmodul aufrastbar ist.

9. Anschlußmodul nach Anspruch 1, **dadurch gekennzeichnet**, die Oberteile (2,3) und das Zusatzmodul (13) mindestens an einer Stirnseite (18) Führungselemente (15,16) aufweist.

10. Anschlußmodul nach Anspruch 9, **dadurch gekennzeichnet, daß** die Führungselemente aus einer Nut (15) und einer Feder (16) bestehen.

11. Anschlußmodul nach Anspruch 1, **dadurch gekennzeichnet, daß** die Trägerplatte (1) und zumindest ein Oberteil (2,3) einstückig ausgebildet sind.
